# EUROPEAN PATENT APPLICATION

(11) **EP 4 254 298 A1**
(43) Date of publication of application: **04.10.2023**
(21) Application number: 23164945.0
(22) Date of filing: 29.03.2023
(51) Int. Cl.: G06Q 30/0201, G06Q 30/0251

(54) **INFORMATION PROCESSING APPARATUS, INFORMATION PROCESSING METHOD, AND PROGRAM THEREOF**

(30) Priority: 29.03.2022 JP 2022053172
(71) Applicant: Rakuten Group, Inc., Setagaya-ku Tokyo 158-0094 (JP)
(72) Inventor: HIRATE, Yu, Setagaya-ku, Tokyo 158-0094 (JP); RAHMAN, Md Mostafizur, Setagaya-ku, Tokyo 158-0094 (JP); EBISU, Takuma, Setagaya-ku, Tokyo 158-0094 (JP); KONDAPAKA, Manoj, Setagaya-ku, Tokyo 158-0094 (JP); KIKUTA, Daisuke, Setagaya-ku, Tokyo 158-0094 (JP); ABROL, Satyen, Setagaya-ku, Tokyo 158-0094 (JP); LEMERCIER, Maxence, Setagaya-ku, Tokyo 158-0094 (JP)
(74) Representative: Hoffmann Eitle

(57) **Abstract**

Provided is a technique for realizing targeting in which social connections are considered. An information processing apparatus acquires factual features of each of a plurality of users as user features, and based on the user features, creates a relationship graph showing a social relationship between the plurality of users, sets one or more users among the plurality of users as a target user group, and based on the relationship graph and the user features of the target user group, adds one or more users, among the plurality of users, having a social relationship with a user included in the target user group to the target user group and determines the resulting target user group as an expanded user group.

## Description

### TECHNICAL FIELD

The present invention relates to an information processing apparatus, an information processing method, and a program thereof, and in particular, relates to a technique for determining a user group to which advertisements are to be distributed.

### BACKGROUND ART

In recent years, when advertisements are distributed through the Internet, selection (targeting) of a user group to which advertisements are to be distributed is performed. A technique disclosed in JP 2017-097717A is known as a targeting technique, for example. In JP 2017-097717A, a technique is described in which a group of consumers that are estimated to have purchased goods to be advertised is determined as an advertisement target, based on purchase histories of other goods, although there is no purchase history of the goods to be advertised.

JP 2017-097717Ais an example of related art.

### SUMMARY OF THE INVENTION

In the technique disclosed in JP 2017-097717A, an advertisement distribution target is determined based on a database that stores features related to consumption behaviors of consumers belonging to a plurality of preset consumer groups. However, in this technique, social connections between consumers that may influence the consumption behavior of a consumer (user) are not considered, and there is a problem in that effective targeting is not realized.

The present invention has been made in view of the above problem, and an object thereof is to provide a technique for realizing targeting in which social connections are considered.

In order to solve the above problem, one aspect of an information processing apparatus according to the present invention includes: acquisition means for acquiring factual features of each of a plurality of users as user features; creation means for creating a relationship graph indicating a social relationship between the plurality of users based on the user features; target user setting means for setting at least one user among the plurality of users as a target user group; and determination means for, based on the relationship graph and the user feature of the target user group, adding at least one user having a social relationship with a user included in the target user group, among the plurality of users, to the target user group, and determining the resulting target user group as an expanded user group.

The information processing apparatus may further include prediction means for predicting, as a similar user group, at least one user, among the plurality of users, having the user feature similar to that of the target user based on the user feature, in which, based on the relationship graph and the user feature of the similar user group, the determination means adds at least one user, among the plurality of users, having a social relationship with a user included in the similar user group to the target user group and the similar user group, and determines the resulting target user group and similar user group as the expanded user group.

The prediction means may predict the similar user group using a machine learning model.

In the relationship graph, each user may be represented by a user node, and the creation means may connect nodes with links indicating that the social relationship is present, based on the factual information.

The creation means may connect a pair of user nodes having the same factual feature with an explicit link, and connect, with an implicit link, a pair of nodes that are not connected with the explicit link, based on a plurality of pairs of user nodes that are connected with the explicit links.

The creation means may determine a closeness of the connected pair based on at least one factual feature shared by the pair.

The information processing apparatus may further include distribution means for distributing an advertisement to the expanded user group.

In order to solve the above problem, one aspect of an information processing method according to the present invention includes: acquiring factual features of each of a plurality of users as user features; creating a relationship graph indicating a social relationship between the plurality of users based on the user features; setting at least one user among the plurality of users as a target user group; and adding, based on the relationship graph and the user feature of the target user group, at least one user having a social relationship with a user included in the target user group, among the plurality of users, to the target user group, and determining the resulting target user group as an expanded user group.

In order to solve the above problem, one aspect of a program according to the present invention is an information processing program for causing a computer to execute information processing, the program causing the computer to execute: acquisition processing for acquiring factual features of each of a plurality of users as user features; creation processing for creating a relationship graph indicating a social relationship between the plurality of users based on the user features; target user setting processing for setting at least one user among the plurality of users as a target user group; and determination processing for, based on the relationship graph and the user feature of the target user group, adding at least one user having a social relationship with a user included in the target user group, among the plurality of users, to the target user group, and determining the resulting target user group as an expanded user group.

According to the present invention, it is possible to realize targeting in which social connections are considered.

The objects, aspects, and effects of the present invention described above and the objects, aspects and effects of the present invention not described above can be understood by a person skilled in the art based on the following modes for carrying out the invention by referring to the accompanying drawings and the description of the claims.

### BRIEF DESCRIPTION OF THE DRAWINGS

FIG. 1 shows a configuration example of an information processing system.
FIG. 2 shows an example of a functional configuration of an information processing apparatus 10 according to an embodiment.
FIG. 3 shows a flowchart of processing for creating a relationship graph.
FIG. 4A is a diagram for illustrating an explicit link.
FIG. 4B is a diagram for illustrating an explicit link.
FIG. 4C is a diagram for illustrating an explicit link.
FIG. 4D is a diagram for illustrating an implicit link.
FIG. 5A is a diagram for illustrating processing for inferring a relationship between links.
FIG. 5B shows a flowchart of an example of processing for grouping pairs into clusters.
FIG. 6A shows a conceptual diagram of a score (closeness score) based on closeness of a relationship for a user pair.
FIG. 6B shows schematic architecture of a score prediction model 112.
FIG. 7 shows a conceptual diagram of a relationship graph.
FIG. 8A is a diagram for illustrating a training stage of a prospective user prediction model 111.
FIG. 8B is a diagram for illustrating a prediction stage of the prospective user prediction model 111.
FIG. 9 shows a hardware configuration example of an information processing apparatus 10 and a user apparatus 11.
FIG. 10 shows a flowchart of first target expansion processing executed by the information processing apparatus 10.
FIG. 11 shows a flowchart of second target expansion processing executed by the information processing apparatus 10.
FIG. 12A shows a conceptual diagram of the first target expansion processing.
FIG. 12B shows a conceptual diagram of the second target expansion processing.

### EMBODIMENTS OF THE INVENTION

Hereinafter, an embodiment for implementing the present invention will be described in detail with reference to the accompanying drawings. Constituent elements disclosed hereinafter that have the same function as each other are denoted by identical reference signs, and description thereof is omitted. Note that the embodiment disclosed hereinafter is an example serving as a means of realizing the present invention, the embodiment is to be amended or modified as appropriate according to the configuration of the device to which the present invention is applied and various conditions, and the present invention is not limited to the following embodiment. Also, not all combinations of features described in the present embodiment are essential for the solving means of the present invention.

### Functional Configuration of Information processing apparatus

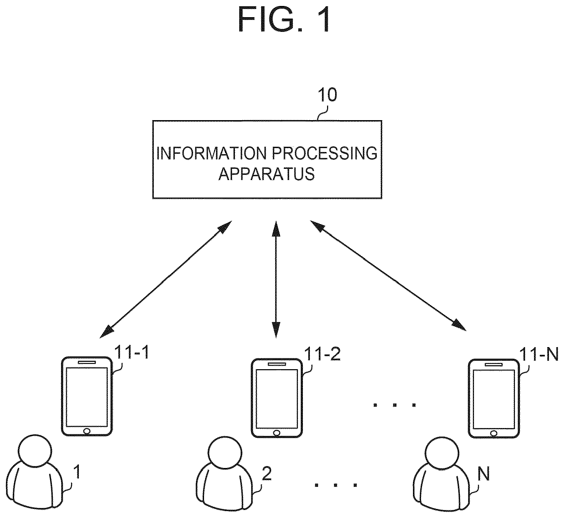

FIG. 1 shows an example of a configuration of an information processing system according to the present embodiment. In one example, as shown in FIG. 1, the present information processing system includes an information processing apparatus 10, and a plurality of user apparatuses 11-1 to 11-N (N>1) used by any plurality of users 1 to N. Note that in the following description, the user apparatuses 11-1 to 11-N can be referred to collectively as user apparatuses 11 unless otherwise specified. Also, in the following description, the terms "user apparatus" and "user" can be used synonymously.

The user apparatus 11 is, for example, a device such as a smartphone or a tablet, and can communicate with the information processing apparatus 10 via a public network such as LTE (Long Term Evolution) or a wireless communication network such as a wireless LAN (Local Area Network). The user apparatus 11 has a display unit (display screen) such as a liquid crystal display, and each user can perform various operations through a GUI (Graphic User Interface) installed in the liquid crystal display. The operations include various operations performed with a finger or a stylus on content such as images displayed on the screen, such as a tap operation, a slide operation, or a scroll operation.

Note that the user apparatus 11 is not limited to a device of the form shown in FIG. 1, and may also be a device such as a desktop PC (Personal Computer) or a laptop PC. In this case, the operations performed by each user can be performed using an input device such as a mouse or a keyboard. Also, the user apparatus 11 may include a display screen separately.

The user apparatus 11 can use a service by logging into a web service (Internet-related service) provided via the information processing apparatus 10, from the information processing apparatus 10 or another device (not shown). The web service can include an online mall, an online supermarket, or a service relating to communication, finance, real estate, sports, or travel, which are provided via the Internet. The user apparatus 11 can transmit information relating to the user of the user apparatus 11 to the information processing apparatus 10 by using such a web service.

For example, the user apparatus 11 can transmit information on a feature relating to the user apparatus or the user, such as the IP (Internet Protocol) address of the user apparatus 11, the address of the user, or the name of the user, to the information processing apparatus 10.

Also, the user apparatus 11 can perform positioning calculation based on signals or the like received from GPS (Global Positioning System) satellites (not shown), generate information obtained through the calculation as position information of the user apparatus 11, and transmit the generated information to the information processing apparatus 10.

The information processing apparatus 10 acquires various types of information from the user apparatus 11, and based on the information, creates a relationship graph network (hereinafter referred to as a relationship graph) showing social relationships between users. Then, the information processing apparatus 10 uses the created relationship graph to determine an expanded user group that has a social connection (has social relationships) with one or more selected users selected as appropriate (e.g., one or more randomly selected users (seed users)), as an advertisement distribution target. That is, the information processing apparatus 10 uses the created relationship graph to perform target expansion (expanded targeting) based on the seed users.

### Functional Configuration of Information processing apparatus 10

The information processing apparatus 10 according to the present embodiment first acquires various types of information from the user apparatuses 11-1 to 11-N and creates a relationship graph showing social relationships between the users 1 to N. Then, the information processing apparatus 10 performs target expansion using the relationship graph.

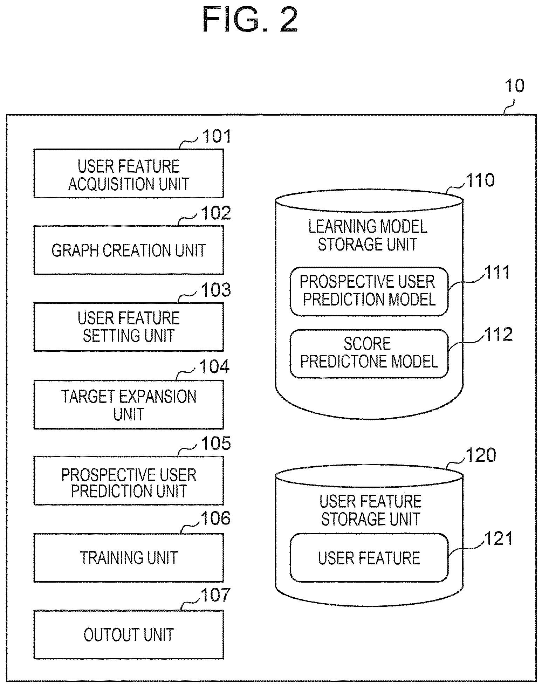

FIG. 2 shows an example of a functional configuration of the information processing apparatus 10 according to this embodiment.

The information processing apparatus 10 shown in FIG. 2 includes a user feature acquisition unit 101, a graph creation unit 102, a user feature setting unit 103, a target expansion unit 104, a prospective user prediction unit 105, a training unit 106, an output unit 107, a learning model storage unit 110, and a user feature storage unit 120. The learning model storage unit 110 stores a prospective user prediction model 111 and a score prediction model 112, which are machine learning models. The various learning models will be described later. Also, the user feature storage unit 120 stores user features 121.

The user feature acquisition unit 101 acquires factual features (factual information) (hereinafter referred to as user features) about the user apparatuses or the users from each of the user apparatuses 11-1 to 11-N. The user features are features (information) based on facts actually or objectively acquired from the user apparatuses or the users. For example, the user feature acquisition unit 101 can directly acquire the user features from the user apparatuses 11. Also, the user feature acquisition unit 101 can acquire the user features as information registered with a predetermined web service by the users of the user apparatuses 11.

The user features include IP addresses of the user apparatuses, the addresses of the users or the names of the users, the numbers of credit cards possessed by the users, demographic information of the users (demographic user attributes such as sex, age, residential area, occupation, and family composition), and the like. Also, the user features may include registration numbers and registration names used when using a predetermined web service. Also, the user features may include information relating to a call history, a delivery address other than the address of the user for a product at the time of using the predetermined web service, a use status during use of the predetermined web service, a use history, a search history, and points that can be accumulated through use of a service. Thus, the user features can include any information, including information relating to the user apparatus or the user, and information relating to use of a predetermined service through communication.

The user feature acquisition unit 101 stores the acquired user features in the user feature storage unit 120 as the user features 121.

The graph creation unit 102 uses the various user features acquired by the user feature acquisition unit 101 to create a relationship graph. The relationship graph will be described later.

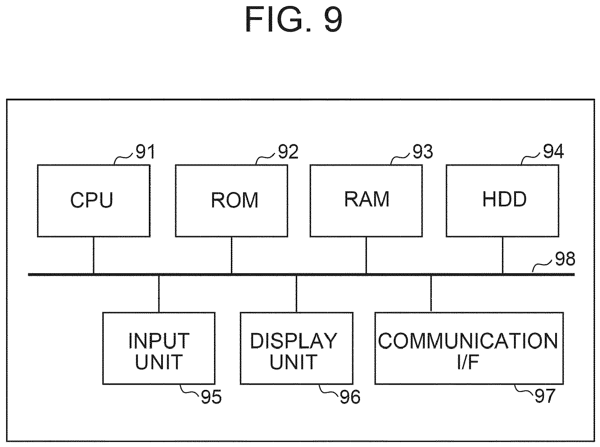

The user feature setting unit 103 sets any target user group selected from the user apparatuses 11-1 to 11-N as seed users. Note that the seed user may also be one person. The seed user may be set by the operator through an input operation using the input unit (the input unit 95 in FIG. 9), may be set in advance in the system, or may be set by any program stored in the storage unit (the ROM 92 or the RAM 93 in FIG. 9). Furthermore, the user feature setting unit 103 acquires the user features of the set seed users from the user features 121 and sets them in the target expansion unit 104 and the prospective user prediction unit 105. Furthermore, the user characteristic setting unit 103 acquires the user features of user groups other than the seed users among the user apparatuses 11-1 to 11-N from the user features 121, and sets them in the prospective user prediction unit 105.

The target expansion unit 104 performs target expansion (determination of an expanded user group) using social connections. In one embodiment, the target expansion unit 104 uses the relationship graph created by the graph creation unit 102 to perform target expansion based on the seed users set by the user feature setting unit 103. In another embodiment, the target expansion unit 104 performs target expansion based on a group of prospective users (described later) predicted based on the set seed users. The prospective user group is predicted by the prospective user prediction unit 105. The target expansion processing will be described later.

The prospective user prediction unit 105 predicts a user group predicted to have the same (similar) user features as the seed users set by the user feature setting unit 103, as a prospective user group (similar user group). In this embodiment, the prospective user is predicted using the prospective user prediction model 111 that has been trained by the training unit 106. The prospective user prediction processing will be described later. Note that the prospective user group prediction processing is not limited to using the prospective user prediction model 111.

The training unit 106 trains the prospective user prediction model 111 and the score prediction model 112 and stores the trained prospective user prediction model 111 and the score prediction model 112 in the learning model storage unit 110. Training processing of each learning model will be described later.

The output unit 107 outputs the result of target expansion performed by the target expansion unit 104 (that is, information on the expanded user group). The output may be any output processing, and may be output to an external device via a communication I/F (the communication I/F 97 in FIG. 9), or may be display on a display unit (the display unit 96 in FIG. 9).

### Procedure for Creating Relationship Graph

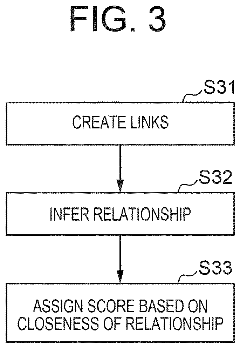

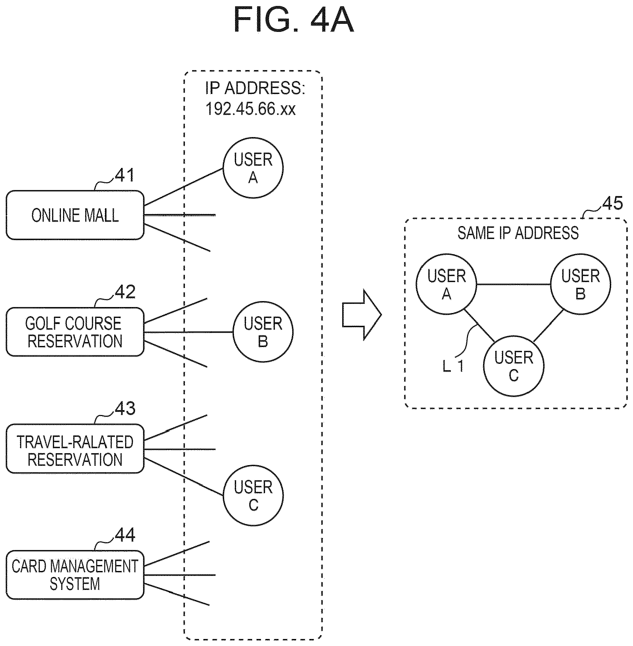

Next, a procedure for creating a relationship graph according to this embodiment will be described. Note that users A to E in the following description are users referred to for the description, and can be users of the user apparatuses 11. Also, the relationship graph is constituted by connections of user nodes circled in FIGS. 4A to 4D, and in the following description, the user nodes are simply referred to as users. FIG. 3 shows a flowchart of processing for creating the relationship graph, which is executed by the graph creation unit 102 according to the present embodiment. Each step of the processing in FIG. 3 will be described below.

### Step S31: Link Creation

In step S31, the graph creation unit 102 predicts and creates links (links indicating that there are social relationships) between a plurality of users.

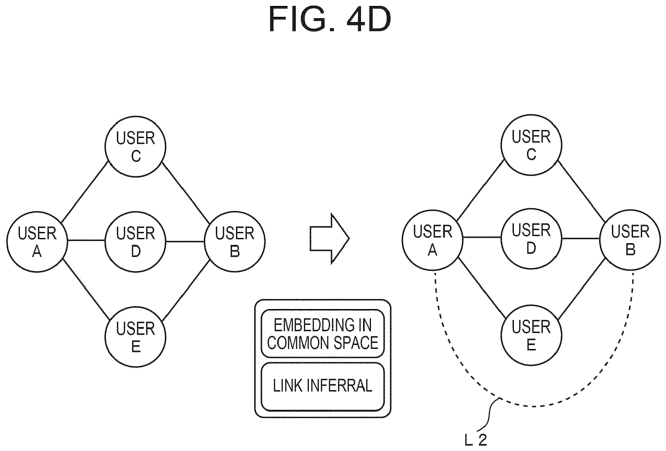

The processing for creating links will be described with reference to FIGS. 4A to 4D. FIGS. 4A to 4C are diagrams for illustrating an explicit link, and FIG. 4D is a diagram for illustrating an implicit link. An explicit link is a link created by explicit features held in common by two users (a user pair). An implicit link is a link created as an indirect relationship using explicit links that have already been created, although there is no clear explicit feature held in common by the user pair. Thus, links between users are identified by explicit links and implicit links.

FIG. 4A shows an example in which explicit links are created using an IP address of user apparatuses of users as a common feature. FIG. 4A shows an example in which an online mall 41, a golf course reservation service 42, a travel-related reservation service 43, and a card management system 44 exist as web services available to users A to C. In FIGS. 4A to 4C, four web services are shown, but the number of web services is not limited to a specific number.

The online mall 41 is a shopping mall that is available online (using the Internet). For example, the online mall 41 can provide a wide variety of products and services such as fashion, books, food, concert tickets, and real estate.

The golf course reservation service 42 is operated by a website that provides a service relating to a golf course online, and for example, can provide a search for golf courses, reservations, and lesson information.

The travel-related reservation service 43 is operated by a website that provides various travel services that are available online. The travel-related reservation service 43 can, for example, provide reservations for hotels and travel tours, reservations for airline tickets and rental cars, sightseeing information, hotels, and information on surrounding areas of hotels.

The card management system 44 is operated by a website that provides a service related to a credit card issued and managed by a predetermined card management company. The card management system 44 may also provide a service relating to at least one of the online mall 41, the golf course reservation service 42, and the travel-related reservation service 43.

In the example of FIG. 4A, the users A to C use the same IP address (=198.45.66.xx) to use the online mall 41, the golf course reservation service 42, and the travel-related reservation service 43. The information on the IP address can be acquired by the user feature acquisition unit 101.

In such a case, the graph creation unit 102 creates explicit links between the users A to C (e.g., a link L1 between the user A and the user C) with the feature of having the same IP address, as shown in a link state 45.

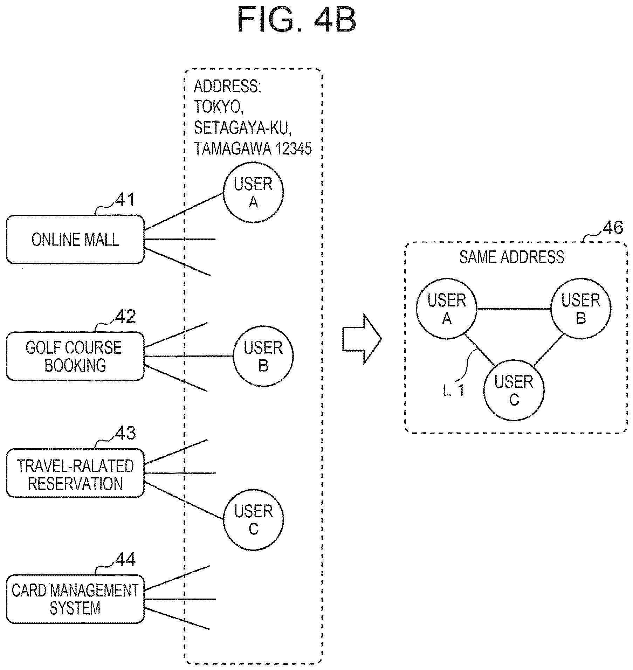

FIG. 4B shows an example of creating explicit links using a feature of an address of users as a common feature. Similarly to FIG. 4A, FIG. 4B shows an example in which an online mall 41, a golf course reservation service 42, a travel-related reservation service 43, and a card management system 44 exist as web services that are available to the users A to C. Here, the users A to C respectively use the online mall 41, the golf course reservation service 42, and the travel-related reservation service 43 by registering the same address (delivery address). Information on the address can be acquired by the user feature acquisition unit 101.

In such a case, the graph creation unit 102 creates explicit links between the users A to C (for example, a link L1 between the user A and the user C) with the feature of having the same address, as shown in a link state 46.

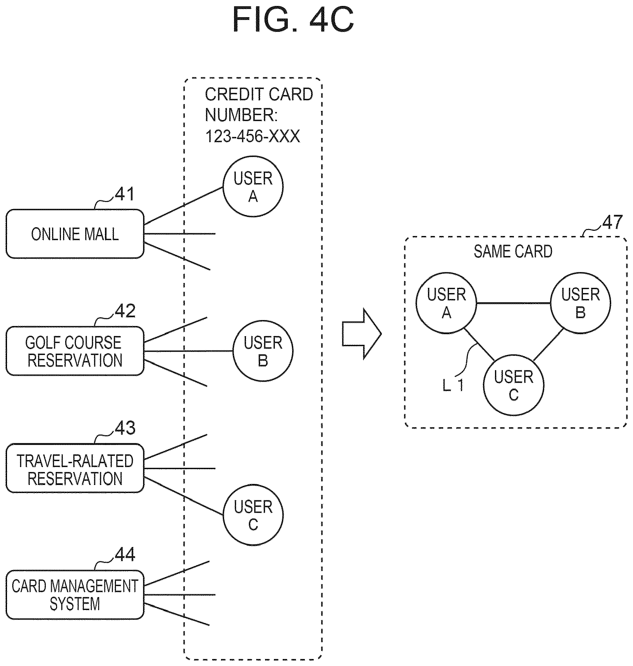

FIG. 4C shows an example of creating explicit links using a feature of credit card numbers used by users as a common feature. Similarly to FIG. 4A, FIG. 4C shows an example in which an online mall 41, a golf course reservation service 42, a travel-related reservation service 43, and a card management system 44 exist as web services that are available to the users A to C. Here, the users A to C each register the same credit card to use the online mall 41, the golf course reservation service 42, and the travel-related reservation service 43. Information including the credit card number can be acquired by the user feature acquisition unit 101.

In such a case, the graph creation unit 102 creates explicit links between the users A to C (for example, a link L1 between the user A and the user C) with the feature of having the same card, as shown in a link state 47.

FIG. 4D shows an example of creating an implicit link between users. In the example of FIG. 4D, the user C, the user D, and the user E are connected to the user A by explicit links, and the user C, the user D, and the user E are connected to the user B by explicit links. This kind of link feature (a feature indicating a relationship between links) is embedded in the common feature space, and a link obtained by inferring that a relationship is implicitly constructed between users (nodes) is created (established) as an implicit link. In the example of FIG. 4D, the user A and the user B are not connected by an explicit link, but an implicit link L2 is created as a result of inferring that there is a relationship in the common feature space. Note that the graph creation unit 102 predicts and creates explicit links between users by performing learning (representation learning, relationship learning, embedding learning, knowledge graph embedding) of a user relationship graph constituted by nodes (users) connected by explicit links. At this time, the graph creation unit 102 may perform the learning based on a known embedding model or its extension, as appropriate.

### Step S32: Inferring Relationships Between Links

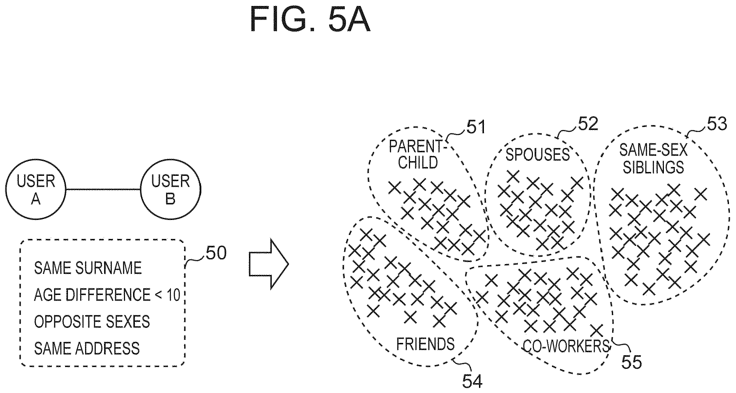

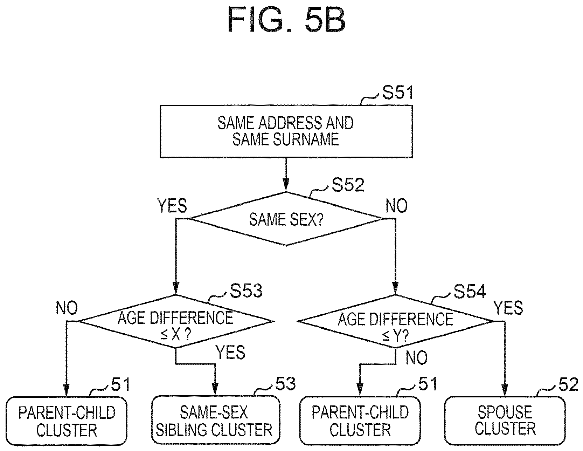

In step S32, the graph creation unit 102 infers relationships between the links predicted and created in step S31. The processing for inferring relationships between links will be described with reference to FIGS. 5A and 5B. FIG. 5A is a diagram for illustrating processing for inferring relationships between links, and shows an example of inferring a relationship of a link between the user A and the user B who are connected by an explicit link.

The graph creation unit 102 treats the pair of users connected by the link created in step S31 as a data point and groups the pair (the data point) into a cluster representing a common type, using various types of information acquired by the user feature acquisition unit 101. The various types of information can be information such as an IP address, an address, a credit card, an age, a sex, or a friend. Also, each cluster can be a cluster having a relationship such as spouses, a parent and child, neighbors, people sharing the same household, co-workers, friends, siblings of the same sex, or siblings of different sexes. In the example of FIG. 5A, a pair of users is indicated by an X mark, and a parent-child cluster 51, a spouse cluster 52, a same-sex sibling cluster 53, a friend cluster 54, and a co-worker cluster 55 are shown as clusters into which the pair can be grouped. Note that although five clusters are shown in FIG. 5A, the number of clusters is not limited to a specific number.

For example, if the user A and the user B have (share) features 50 of having the same surname, having an age difference of 10 years or less, being of opposite sexes, and having the same address, the graph creation unit 102 can group the pair of the user A and the user B into the cluster (spouse cluster 52) indicating the relationship of husband and wife (spouses).

FIG. 5B shows a flowchart of an example of processing for grouping pairs into clusters, which is executed by the graph creation unit 102.

At the start of step S51, it is assumed that the pair to be grouped has the features of having the same address and the same surname. In step S52, the graph creation unit 102 determines whether or not the target pair has the feature of being of the same sex. If the target pair has the feature of being of the same sex (Yes in step S52), the graph creation unit 102 determines in step S53 whether or not the age difference of the target pair is a predetermined threshold value (=X value) or less. If the age difference of the target pair is greater than the X value (No in step S53), the graph creation unit 102 groups the target pair into the parent-child cluster 51. If the age difference is the X value or less (Yes in step S53), the graph creation unit 102 groups the target pair into the same-sex siblings cluster 53. If the target pair does not have the feature of being of the same sex (No in step S52), the graph creation unit 102 determines in step S54 whether or not the age difference of the target pair is a predetermined threshold value (=Y value) or less. If the age difference is greater than the Y value (No in step S54), the graph creation unit 102 groups the target pair into the parent-child cluster 51. If the age difference is the Y value or less (Yes in step S54), the graph creation unit 102 groups the target pair into the spouse cluster 52.

### Step S33: Score Assignment Based on Closeness of Relationship

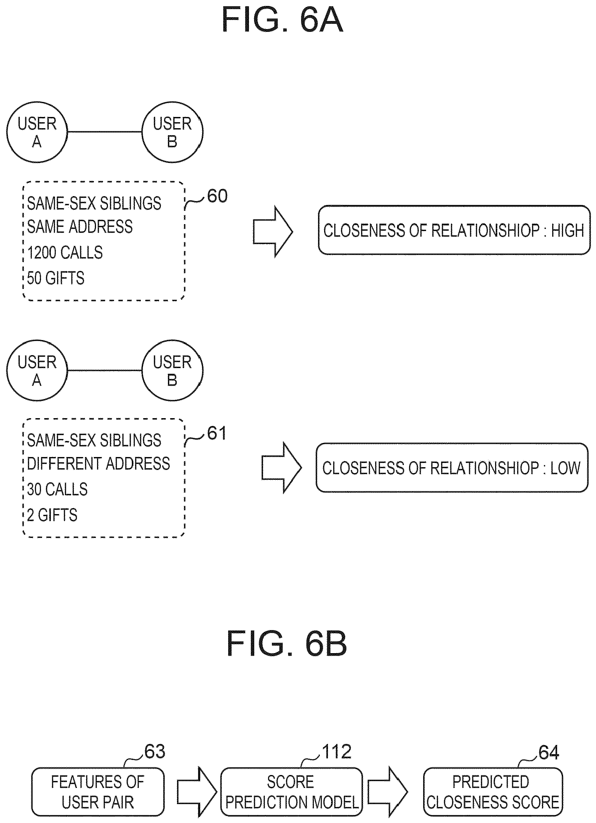

In step S33, the graph creation unit 102 predicts a score based on the closeness of the relationship for the pair inferred in step S32, and assigns the score to the pair. In this embodiment, the score is a numeric value between 0 and 1, but there is no particular limitation on the numeric value that the score can take. FIG. 6A shows a conceptual diagram of a score based on the closeness of the relationship for a user pair (hereinafter referred to as a closeness score).

In the example of FIG. 6A, the closeness of the relationship between the pair of users changes depending on the features that the user A and the user B connected by the explicit link have (share). In the upper part of FIG. 6A, if the user A and the user B have the features 60 of being same-sex siblings, having the same address, having a call history of 1200 calls, and exchanging gifts 50 times, the closeness of the relationship between the pair of users (i.e., the closeness score) is higher. On the other hand, in the lower part of FIG. 6A, if the user A and the user B have features 61 of being same-sex siblings, having different addresses, having a call history of 30 calls, and exchanging two gifts, the closeness of the relationship between the pair of users (i.e., the closeness score) is lower. In this manner, as in the example of FIG. 6A, even if the user A and the user B are same-sex siblings, the closeness of the relationship between the pair differs depending on other features shared by the pair of users. It is observed that pairs with high relationship closeness have a close social distance to each other and have a high influence on each other. On the other hand, it is observed that pairs with low relationship closeness have a far social distance from each other and do not have a close relationship.

In this embodiment, a score prediction model 112 is used to predict the closeness score for a user pair. Schematic architecture of the score prediction model 112 is shown in FIG. 6B. The score prediction model 112 is a learning model that receives features 63 of the user pair as input and predicts the closeness score 64 for the features 63.

The score prediction model 112 is, for example, a learning model that performs weak supervised learning, such as a learning model using a convolutional neural network (CNN). In the present embodiment, the score prediction model 112 is a learning model that is trained using closeness scores (0 to 1) attached to a plurality of features for user pairs as training data, as shown in FIG. 6A. For example, in the training stage, combined data of a closeness score close to 1 set for the features 60 in FIG. 6A and a closeness score close to 0 set for the features 61 in FIG. 6A is used as training data. The training processing is performed by the training unit 106. It should be noted that the score prediction model 112 may be different for each type of relationship of a user pair, and may be a learning model trained according to one type of relationship.

It should be noted that, in the present embodiment, although the closeness score for a user pair is predicted using the score prediction model 112, the graph creation unit 102 may also be configured to predict the score using another method.

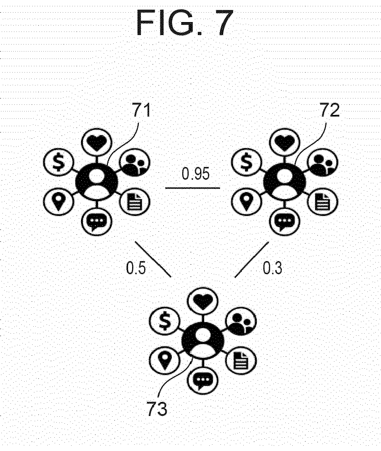

Through the above processing, explicit links or implicit links are formed between a plurality of users, closeness scores are assigned for each link, and a relationship graph is created. FIG. 7 shows a conceptual diagram of a relationship graph. Each user 71 to 73 has a plurality of features, and pairs of users are assigned predicted closeness scores as described above.

### Prospective User Prediction Processing

Next, prospective user prediction processing according to the present embodiment will be described. In this embodiment, the prospective user prediction model 111 is used to perform prospective user prediction processing. The training stage and prediction stage of the prospective user prediction model 111 will be described separately.

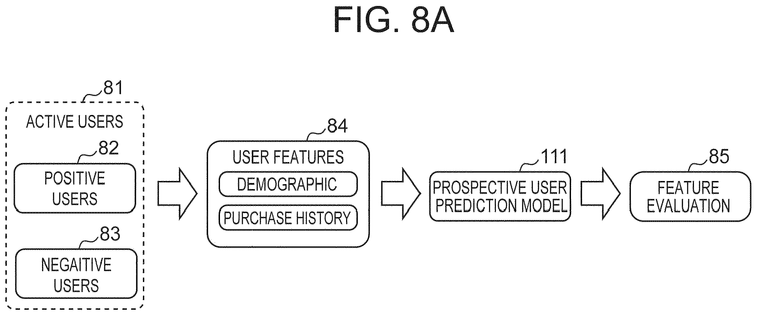

FIG. 8A shows a diagram for illustrating the training stage of the prospective user prediction model 111. First, the user feature setting unit 103 sets active users 81 including a plurality of users. For example, the user feature setting unit 103 selects a plurality of users who have used a predetermined web service for a certain period of time (e.g., six months) from the users of the user apparatuses 11-1 to 11-N shown in FIG. 1, as active users 81. Alternatively, the user characteristic setting unit 103 may set a plurality of preset users among the users of the user apparatuses 11-1 to 11-N, as the active users 81.

After setting the active users 81, the user feature setting unit 103 extracts a plurality of positive users 82 and a plurality of negative users 83 from the active users 81. A positive user 82 is a user who has purchased and/or used a given product or service through the web service, and/or positively evaluated the product or service through the web service. On the other hand, a negative user 83 is a user other than a positive user 82, who is randomly extracted from the active users 81.

Next, the user feature setting unit 103 acquires the respective user features 84 of the positive user 82 and the negative user 82 from the user features 121 stored in the user feature storage unit 120. For example, the user features 84 include demographic information and purchase histories (information on product genres and types, etc.) on the web service for the positive users 82 and the negative users 82. The demographic information and the purchase history each include a plurality of segmented features. Note that the user features 84 are not limited to demographic information and purchase history, and may include other features, such as point status (available points, etc.), point features (information related to point transactions, such as points earned/used from online or offline shops, etc.), and the like. The training unit 106 trains the prospective user prediction model 111 using the user features 84 and the categories (labels (correct data)) of positive users or negative users corresponding to the user features.

The prospective user prediction model 111 is, for example, a learning model based on XGBoost. In the learning stage, the learning unit 106 verifies and tunes (adjusts) hyperparameters (parameters that control the behavior of the prospective user prediction model 111) through grid search and cross-validation. The prospective user prediction model 111 can generate results (feature evaluation 85) that show how the input data (user features) affect the output of the model, since XGBoost is a tree (decision tree) based model. This makes it possible, for example, to verify which user features (combination of subdivided features) the positive users have more influence on.

The trained prospective user prediction model 111 is configured to represent the likelihood of having user features similar to those of positive users for each user in any input user group. The likelihood is represented by a numerical value of 0 to 1, for example, with 1 being the maximum likelihood. Here, for example, if the threshold is set to 0.5, the prospective user prediction unit 105 can predict (determine) a user having a likelihood greater than 0.5 as a prospective user.

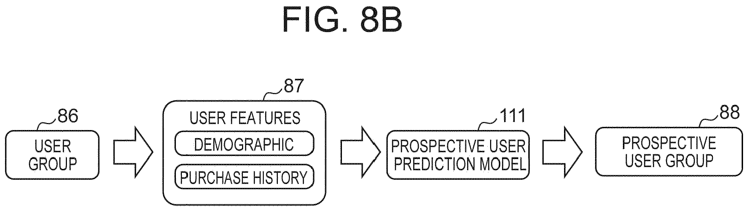

In the prediction (estimation) stage, a user group predicted to have user features similar to those of seed users (corresponding to positive users in the training stage) is predicted as a prospective user group. FIG. 8B shows a diagram for describing the prospective user group prediction stage.

The prospective user prediction unit 105 predicts the prospective user group 88 by inputting user features 87 of a user group 86 other than the seed users set by the user feature setting unit 103 among the user apparatuses 11-1 to 11-N to the trained prospective user prediction model 111. The user features 87 include, but are not limited to, demographic information and purchase history with the web service, as described with reference to FIG. 8A. As described above, the prospective user prediction model 111 outputs, for each user in the user group 86, the likelihood (e.g., a numeric value between 0 and 1) of having user features similar to those of the seed users. When the threshold is set to 0.5, the prospective user prediction unit 105 can predict one or more users among the user group 86 who have a likelihood higher than 0.5, as the prospective user group 88.

Next, target expansion processing using the above-described relationship graph indicating social connections according to the present embodiment will be described. First, as the first target expansion processing, a mode using only the relationship graph will be described. Next, a mode using the prospective user prediction model 111 and the relationship graph will be described as the second target expansion processing.

### First Target Expansion Processing

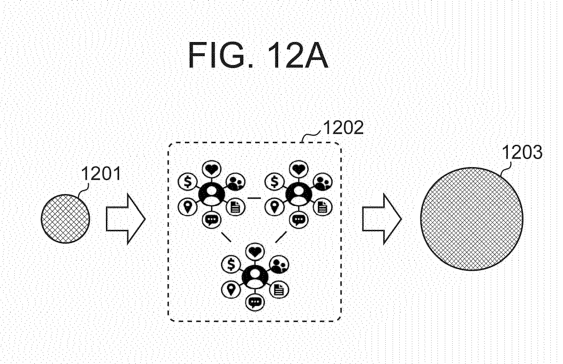

FIG. 12A shows a conceptual diagram of the first target expansion processing. The target expansion unit 104 applies the user features of the seed users 1201 (target user group) set by the user feature setting unit 103 to the relationship graph 1202 created by the graph creation unit 102, adds a user group with social connections to the seed users 1201 to the seed users 1201, and determines the result as an expanded user group 1203. The user features of the seed users 1201 may be any information by which the seed users 1201 can be identified in the relationship graph, such as the address, name, demographic information, and the like of the seed users 1201. The target expansion unit 104 may also add a user whose intimacy score with the seed users 1201 is higher than a predetermined threshold to the seed users 1201 and determine the result as an expanded user group 1203 in the relationship graph.

### Second Target Expansion Processing

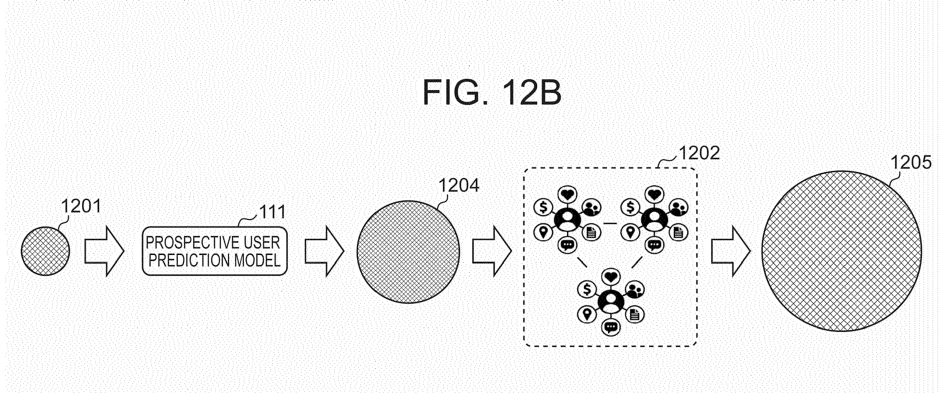

Next, target expansion processing using the above-described relationship graph indicating social connections according to the present embodiment will be described. FIG. 12B shows a conceptual diagram of the second target expansion processing. The prospective user prediction unit 105 uses the above-described prospective user prediction model 111 to predict a prospective user group 1204 from the seed users 1201 (target user group) set by the user feature setting unit 103. Specifically, the prospective user prediction unit 105 predicts a user group (not shown) other than the seed users, who are predicted to have the same user features as the seed users 1201, as a prospective user group 1204.

Subsequently, the target expansion unit 104 applies the user features of the prospective user group 1204 to the relationship graph 1202 created by the graph creation unit 102, adds a user group having social connections with the prospective user group 1204 to the seed users 1201 and the prospective user group 1204, and determines the result as an expanded user group 1205. The user features of the prospective user group 1204 may be any information by which the prospective user group 1204 can be identified in the relationship graph, such as the addresses, names, demographic information, or the like of the prospective user group 1204. The target expansion unit 104 may also add users whose intimacy score with the prospective user group 1204 is higher than a predetermined threshold to the seed users 1201 and the prospective user group 1204 and determine the result as the expanded user group 1205 in the relationship graph.

### Hardware Configuration of Information processing apparatus 10

FIG. 9 is a block diagram showing an example of a hardware configuration of the information processing apparatus 10 according to this embodiment.

The information processing apparatus 10 according to the present embodiment can be implemented also on any one or more computers, mobile devices, or other processing platforms.

With reference to FIG. 9, an example is shown in which the information processing apparatus 10 is implemented on a single computer, but the information processing apparatus 10 according to the present embodiment may be implemented on a computer system including a plurality of computers. The plurality of computers may be connected so as to be capable of mutual communication through a wired or wireless network.

As shown in FIG. 9, the information processing apparatus 10 may include a CPU 91, a ROM 92, a RAM 93, an HDD 94, an input unit 95, a display unit 96, a communication I/F 97, and a system bus 98. The information processing apparatus 10 may include an external memory.

The CPU (Central Processing Unit) 91 performs overall control of operations in the information processing apparatus 10, and controls each constituent unit (92 to 97) via the system bus 98, which is a data transmission path.

The ROM (Read Only Memory) 92 is a non-volatile memory that stores control programs and the like needed for the CPU 91 to execute processing. Note that the program may also be stored in a non-volatile memory such as the HDD (Hard Disk Drive) 94 or an SSD (Solid State Drive), or an external memory such as a detachable storage medium (not shown).

The RAM (Random Access Memory) 93 is a volatile memory and functions as a main memory, a work area, and the like of the CPU 91. That is, during execution of processing, the CPU 91 executes various functional operations by loading necessary programs and the like from the ROM 92 to the RAM 93, and executing the programs and the like. The learning model storage unit 110 and the user feature storage unit 120 shown in FIG. 2 can be constituted by the RAM 93.

The HDD 94 stores various types of data, various types of information, and the like that are needed when the CPU 91 performs processing using a program. Also, the HDD 94 stores various types of data, various types of information, and the like obtained by the CPU 91 performing processing using a program or the like.

The input unit 95 is constituted by a keyboard or a pointing device such as a mouse. The display unit 96 is constituted by a monitor such as a liquid crystal display (LCD). The display unit 86 may also function as a GUI (Graphical User Interface) due to being included in combination with the input unit 95.

The communication I/F 97 is an interface that controls communication between the information processing apparatus 10 and an external device.

The communication I/F 97 provides an interface with a network and executes communication with an external device via the network. Various types of data, various types of parameters, and the like are transmitted and received to and from the external device via the communication I/F 97. In this embodiment, the communication I/F 97 may execute communication via a wired LAN (Local Area Network) or a dedicated line conforming to a communication standard such as Ethernet (registered trademark). However, the network that can be used in this embodiment is not limited thereto, and may also be constituted by a wireless network. This wireless network includes a wireless PAN (Personal Area Network) such as Bluetooth (registered trademark), ZigBee (registered trademark), and UWB (Ultra Wide Band). This wireless network also includes a wireless LAN (Local Area Network) such as Wi-Fi (Wireless Fidelity) (registered trademark) and a wireless MAN (Metropolitan Area Network) such as WiMAX (registered trademark). Furthermore, the wireless network includes a wireless WAN (Wide Area Network) such as LTE/3G, 4G, and 5G. Note that it is sufficient that the network connects the devices such that communication is possible therebetween and is capable of communication, and the standard, scale, and configuration of communication is not limited to the above.

The function of at least some of the elements of the information processing apparatus 10 shown in FIG. 2 can be realized by the CPU 91 executing a program. However, the function of at least some of the elements of the information processing apparatus 10 shown in FIG. 2 may also be realized by an operation of dedicated hardware. In this case, the dedicated hardware operates based on control performed by the CPU 91.

### Hardware Configuration of User apparatus 11

The hardware configuration of the user apparatus 11 shown in FIG. 1 may be the same as that shown in FIG. 9. That is, the user apparatus 11 can include the CPU 91, the ROM 92, the RAM 93, the HDD 94, the input unit 95, the display unit 96, the communication I/F 97, and the system bus 98. The user apparatus 11 can display various types of information provided by the information processing apparatus 10 on the display unit 96 and perform processing corresponding to an input operation received from the user via the GUI (constituted by the input unit 95 and the display unit 96).

### Flow of Processing

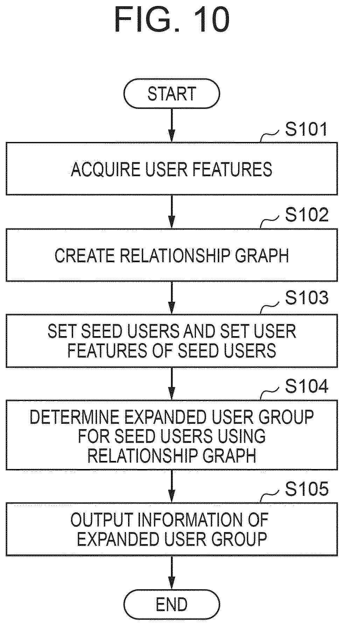

FIG. 10 shows a flowchart of processing the above-described first target expansion processing executed by the information processing apparatus 10 according to this embodiment. The processing shown in FIG. 10 can be realized by the CPU 91 of the information processing apparatus 10 loading a program stored in the ROM 92 or the like to the RAM 93 and executing the loaded program. The information processing system shown in FIG. 1 will be referred to for the description of FIG. 10. The score prediction model 112 trained by the training unit 106 are stored in the learning model storage unit 110.

In step S101, the user feature acquisition unit 101 acquires the user features of the users from the user apparatuses 11-1 to 11-N and stores the acquired user features in the user feature storage unit 120 as the user features 121. The processing of step S101 may also be processing for acquiring (collecting) user features of a predetermined past period.

In step S102, the graph creation unit 102 uses the various user features acquired by the user feature acquisition unit 101 to create a relationship graph for the users 1 to N. The procedure for creating the relationship graph is as described above.

In step S103, the user feature setting unit 103 sets any target user group from among the users 1 to N as the seed users. As described above, the seed users may be set by the operator through an input operation performed using the input unit 95, may be set in the system in advance, or may be set by any program stored in the ROM 92 or the RAM 93. Furthermore, in step S103, the user feature setting unit 103 acquires the user features of the seed users from the user features 121 and sets them in the target expansion unit 104.

In step S104, the target expansion unit 104 applies the user features of the seed users set in step S103 to the relationship graph created in step S102, adds a user group having social connections with the seed users to the seed users, and determines the result as an expanded user group for the seed users. The processing of step S104 corresponds to the processing described with reference to FIG. 12A.

In step S105, the output unit 107 outputs information on the expanded user group determined in step S104. The output unit 107 may also generate various types of information about the expanded user group and output the generated information to an external device (not shown). For example, the output unit 107 can distribute an advertisement created for the seed users to the expanded user group.

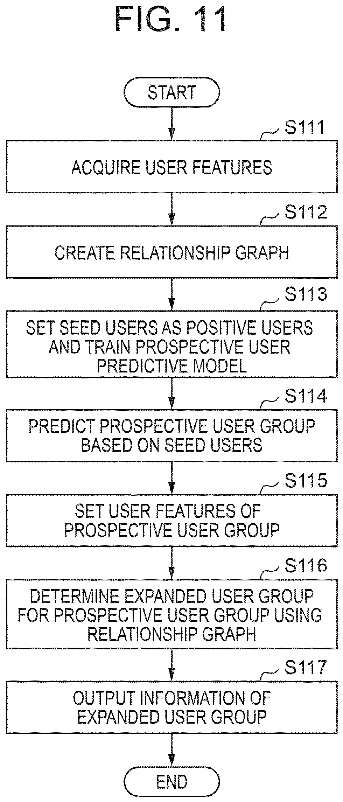

Next, FIG. 11 shows a flowchart of the above-mentioned second target expansion processing executed by the information processing apparatus 10 according to this embodiment. The processing shown in FIG. 11 can be realized by the CPU 91 of the information processing apparatus 10 loading a program stored in the ROM 92 or the like into the RAM 93 and executing the program. As with FIG. 10, the information processing system shown in FIG. 1 will be referred to for the description of FIG. 11. The score prediction model 112 trained by the training unit 106 is stored in learning model storage unit 110.

Since the processing of step S 111 and step S 112 is the same as the processing of step S101 and step S 102 in FIG. 10, the description thereof is omitted.

In step S113, the user feature setting unit 103 sets any target user group from users 1 to N as seed users. As described above, the seed user may be set by the operator through an input operation using the input unit 95, may be set in the system in advance, or may be set by any program stored in the ROM 92 or RAM 93. Furthermore, in step S113, the training unit 106 sets the seed users as positive users, and trains the prospective user prediction model 111. The training processing corresponds to the processing described with reference to FIG. 8A.

In step S114, the prospective user prediction unit 105 predicts prospective user group based on the seed users. Specifically, the prospective user prediction unit 105 inputs the user features of the user group 86 other than the seed users to the prospective user prediction model 111 trained in step S113 to predict the prospective user group. The prospective user prediction unit 105 may also determine the user group added to the seed users in the predicted prospective user group as the final prospective user group.

In step S115, the user information setting unit 103 acquires the user features of the prospective user group from the user features 121 and sets them in the target expansion unit 104.

In step S116, the target expansion unit 104 applies the user features of the prospective user to the relationship graph created in step S112, adds a user group with social connections to the prospective user group to the seed users and the prospective user group, and determines the result as an expanded user group for the prospective user group. The processing of step S116 corresponds to the processing described with reference to FIG. 12B.

In step S117, the output unit 107 outputs information on the expanded user group determined in step S116. The output unit 107 may also generate various types of information about the expanded user group and output the generated information to an external device (not shown). For example, the output unit 107 can distribute an advertisement created for the seed users to the expanded user group.

In this way, the information processing apparatus 10 is configured to determine a user group having social connections with seed users (one or more target users) set as appropriate, as an expanded user group. Since the expanded user group has social connections such as that of a parent and child, with the seed users, there is a high likelihood that the information of the advertisement distributed to the seed users will be shared by the expanded user group. Accordingly, the same advertising effect as that obtained by distributing to the seed users can also be expected for the expanded user group.

The information processing apparatus 10 is also configured to estimate a prospective user group based on the seed users, and determine a user group having social connections with the prospective user group as an expanded user group. That is, for the seed users, users who are expected to perform the same behavior (purchase of goods, etc.) as the seed users in the web service are predicted as the prospective user group, and an expanded user group having social connections with the prospective user group. As a result, it is possible to more broadly specify an expanded user group as advertisement distribution destinations, and further improvement in the advertising effect can be expected.

According to the embodiments described above, it is possible to perform expanded targeting based on social connections from a small number of seed users, and as a result, efficient and effective targeting is realized.

It should be noted that although a specific embodiment has been described above, the embodiment is merely an example, and is not intended to limit the scope of the present invention. The devices and methods described in the present specification can be embodied in forms other than those described above. Also, the above-described embodiment can be subjected to omission, replacement, and modification as appropriate without departing from the scope of the present invention. Modes obtained through such omission, replacement, and modification are encompassed in the description of the claims and the range of equivalency thereto, and belong to the technical scope of the present invention.

## Claims

1. An information processing apparatus comprising:
acquisition means for acquiring factual features of each of a plurality of users as user features;
creation means for creating a relationship graph indicating a social relationship between the plurality of users based on the user features;
target user setting means for setting at least one user among the plurality of users as a target user group; and
determination means for, based on the relationship graph and the user feature of the target user group, adding at least one user having a social relationship with a user included in the target user group, among the plurality of users, to the target user group, and determining the resulting target user group as an expanded user group.

2. The information processing apparatus according to claim 1, further comprising
prediction means for predicting, as a similar user group, at least one user, among the plurality of users, having the user feature similar to that of a user included in the target user group based on the user feature,
wherein based on the relationship graph and the user feature of the similar user group, the determination means adds at least one user, among the plurality of users, having a social relationship with the user of the similar user group to the target user group and similar user group, and determines the resulting target user group and similar user group as the expanded user group.

3. The information processing apparatus according to claim 2, wherein the prediction means predicts the similar user group using a machine learning model.

4. The information processing apparatus according to any one of claims 1 to 3, wherein in the relationship graph, each user is represented by a user node, and the creation means connects nodes with links indicating that the social relationship is present, based on the factual information.

5. The information processing apparatus according to claim 4, wherein the creation means connects a pair of user nodes having the same factual feature with an explicit link, and connects, with an implicit link, a pair of nodes that are not connected with the explicit link, based on a plurality of pairs of user nodes that are connected with the explicit links.

6. The information processing apparatus according to claim 4 or 5, wherein the creation means determines a closeness of the connected pair based on at least one factual feature shared by the pair.

7. The information processing apparatus according to any one of claims 1 to 6, further comprising distribution means for distributing an advertisement to the expanded user group.

8. An information processing method comprising:
acquiring factual features of each of a plurality of users as user features;
creating a relationship graph indicating a social relationship between the plurality of users based on the user features;
setting at least one user among the plurality of users as a target user group; and
adding, based on the relationship graph and the user feature of the target user group, at least one user having a social relationship with a user included in the target user group, among the plurality of users, to the target user group, and determining the resulting target user group as an expanded user group.

9. An information processing program for causing a computer to execute information processing, the program causing the computer to execute:
acquisition processing for acquiring factual features of each of a plurality of users as user features;
creation processing for creating a relationship graph indicating a social relationship between the plurality of users based on the user features;
target user setting processing for setting at least one user among the plurality of users as a target user group; and
determination processing for, based on the relationship graph and the user feature of the target user group, adding at least one user having a social relationship with a user included in the target user group, among the plurality of users, to the target user group, and determining the resulting target user group as an expanded user group.
